# EUROPEAN PATENT SPECIFICATION

(11) **EP 3 048 292 B1**
(45) Date of publication and mention of the grant of the patent: **01.08.2018**
(21) Application number: 15290016.3
(22) Date of filing: 22.01.2015
(51) Int. Cl.: F02M 35/10, F16L 19/028, F16L 19/04, F16L 33/28, F16L 47/04

(54) **Coupling device of an intake system of a charged internal combustion engine, charge air duct, intake system, duct part and clamping ring**
Kupplungsvorrichtung eines Ansaugsystems eines aufgeladenen Verbrennungsmotors, Ladeluftleitung, Ansaugsystem, Leitungsteil und Klemmring
Dispositif de couplage d'un système d'admission d'un moteur à combustion interne chargé, canal d'air de suralimentation, système d'admission, partie de conduit et bague de serrage

(43) Date of publication of application: 27.07.2016
(73) Proprietor: MANN+HUMMEL GmbH, 71636 Ludwigsburg (DE)
(72) Inventor: Sarrazin, Maxime, 53000 Laval (FR)

(56) References cited:
- EP-A1- 2 330 328
- FR-A- 1 147 894
- FR-A1- 2 959 793
- GB-A- 866 587
- GB-A- 2 485 069
- US-A- 5 178 423
- US-A1- 2007 216 158

## Description

### Technical Field

The present invention relates to a coupling device of an intake system of a charged internal combustion engine, in particular of a motor vehicle, for coupling at least one first duct part of a charge air duct with at least one second duct part of the charge air duct, comprising a female joining section at an end of the at least one first duct part and a male joining section at an end of the at least one second duct part, wherein at least the female joining section of the at least one first duct part is at least partly flexible and wherein the male joining section can at least partly be plugged in the female joining section.

The invention further relates to a charge air duct of an intake system of a charged internal combustion engine, in particular of a motor vehicle, with at least one coupling device for coupling at least one first duct part of the charge air duct with at least one second duct part of the charge air duct, said at least one coupling device comprising a female joining section at an end of the at least one first duct part and a male joining section at an end of the at least one second duct part, wherein at least the female joining section of the at least one first duct part is at least partly flexible and wherein the male joining section can at least partly be plugged in the female joining section.

The invention furthermore relates to an intake system of a charged internal combustion engine, in particular of a motor vehicle, with at least one charge air duct comprising at least one coupling device for coupling at least one first duct part of the charge air duct with at least one second duct part of the charge air duct, said at least one coupling device comprising a female joining section at an end of the at least one first duct part and a male joining section at an end of the at least one second duct part, wherein at least the female joining section of the at least first duct part is at least partly flexible and wherein the male joining section can at least partly be plugged in the female joining section.

The invention besides relates to a duct part of a charge air duct of an intake system of a charged internal combustion engine, in particular of a motor vehicle, comprising at least one male joining section at least at one end, which can be plugged in a female joining section at an end of an adjacent duct part of the charge air duct and/or comprising at least one female joining section at least at one end, in which a male joining section at an end of an adjacent duct part of the charge air duct can be plugged in, wherein at least any female joining section of the duct part is at least partly flexible.

The invention moreover relates to a clamping ring of a coupling device of an intake system of a charged internal combustion engine, in particular of a motor vehicle, for coupling at least one first duct part of a charge air duct with at least one second duct part of the charge air duct, wherein a male joining section at an end of the at least one second duct part can at least partly be plugged in a female joining section at an end of the at least one first duct part.

### State of Technology

An air intake system of a charged internal combustion engine of a motor vehicle known from the market has a turbocharger. A rigid duct part of a charge air duct is connected to an outlet for charge air of a compressor of the turbocharger. The rigid duct part is connected to a charge air cooler by use of a flexible hose. For coupling the duct part and the hose, a joining section at an end of the rigid duct part is plugged in a joining section at an end of the hose. The coupling is secured by a hose clamp. In operation of the internal combustion engine temperatures up to 220 °C and more and pressures up to 4 bar and more compared to the ambience can arise in the charge air duct.

From FR 2 959 793 A a system is known which has a guiding bush equipped with a circumferential shoulder, fixed in prolongation of an endfitting of a tube. The guiding bush is inserted in the endfitting. A maintenance ring has two jaws adapted to cooperate with the shoulder and a bead such that the tube is retained in translation with respect to the endfitting.

The US 5 178 423 A presents a connector for a flexible pipe comprises a unitary sleeve having an end portion for coupling to a flexible pipe. The coupling end portion includes an annular threaded projection, a cylindrical portion adjacent the projection, and a frusto-conical portion adjacent the cylindrical portion, with the frusto-conical portion tapering from wide to narrow toward the pipe.

The documents FR 1 147 894 A and GB 866 587 A show additional hose couplings, e.g. in a coupling for the connection of hoses to tubular connecting pieces the hose end is secured on to a nipple, by means of a spring ring adapted to bear against an abutment integral with the nipple by axial displacement of an internally conical sleeve secured positively in its axial position relatively to the nipple.

From US 2007/216158 A1 a connecting device is known with a pipe socket and a hose made of rubber-like material. The pipe socket and the hose abut in a sealing zone which is encased over at least a part of its length by a hose reinforcement which forms part of a geometric fastening configuration with which the pipe socket and the hose are held together.

The GB 2 485 069 A displays a universal kit of selected connector fittings for connecting hose ends together. A locking arrangement is to pass and lock to a ridge of a snap-barb fitting and a circular plate of a twist-barb fitting is fitted to turn in the molded helix thread to releasable lock in the rotator sleeve when twisted.

The EP 2 330 328 A1 relates to a clamping collar suitable for fitting in a groove of a polymer duct to be connected to a nozzle for the transportation of a fluid, in particular to a pressurized hot air duct for motor vehicles of plastic material type and requiring a fitted metal collar.

It is an object of the invention to provide a coupling device of an intake system, a charge air duct, an intake system, a duct part and a clamping ring of the above-mentioned kind, where a coupling of two duct parts of the charge air duct can be improved and/or can be established easier. In particular, the coupling should be more resilient and/or resistant particularly against overpressures and/or high temperatures. Particularly, an airtightness of the connection between the duct parts should be improved.

### Disclosure of Invention

The object is achieved by a clamping ring for engaging around the connected joining sections of the duct parts with regard to a coupling axis, comprising at least one fastener part of at least one fastener for engaging with at least one corresponding fastener part of the at least one second duct part and comprising at least one clamping part of a clamping connection for pressing at least a part of the female joining section at least against the male joining section.

The coupling axis is an imaginary axis of the connection of the male joining section with the female joining section. In the description of the invention "radial", "axial", "coaxial", "circumferential", "tangential", "annular" and the like refer to the coupling axis unless otherwise noted.

According to the invention, the clamping ring has at least two coupling parts which are matched for one of the duct parts each. At least one fastener part of the clamping ring corresponds to at least one fastener part of the at least one second duct part. At least one clamping part of the clamping ring corresponds at least to the female joining section of the first duct part. In this way, the clamping ring can apply to both duct parts in a different way. The function of the fastener and the function of the clamping connection can be optimized more independent. So, the coupling between the two duct parts can be improved.

Further, the clamping ring can be designed for securing the connection of the two duct parts simply by locking the at least one fastener. Different to the hose clamp of the air intake system known from the market, with the invention is no need for a separate adjusting bolt. The inventive clamping ring is self-adjusting.

With the clamping connection a prevention of removing the at least one first duct part from the at least one second duct part can be improved. Besides, an airtightness of the coupling of the duct parts can be further improved.

With the clamping ring a mechanical stability of the coupling of the duct parts can be improved. Particularly, a pressure resistance and/or a temperature resistance of the coupling of the duct parts can be enhanced.

Advantageously, the coupling device can be used with an intake system where high differences between an internal pressure inside the charge air duct and an external pressure can occur. Said pressure differences can be up to 4 bar or more.

Further, a resistance of the coupling of the duct parts against vibrations and/or pulsation pressures can be improved with the clamping ring. Vibrations and pulsation pressures can arise during the operation of the internal combustion engine, particularly of the charger.

Furthermore, a resistance of the coupling of the duct parts against high temperatures can be improved with the clamping ring. The coupling of the duct parts can resist temperatures in the charge air duct up to 220 °C and more.

Overall, a tightness and a stability of the coupling of the duct parts can be improved with the inventive coupling device.

Advantageously, at least one male joining section of at least one second duct part can be at least partly rigid. So, a power transmission from the clamping ring to the second duct part can be improved. Further, at least one fastener part of the at least one second duct part can be more rugged. The at least one fastener part can easier be formed in combination with a rigid duct, in particular a rigid male joining section. Advantageously, the whole at least one second duct part can be rigid. Besides, at least a rigid part of male joining section can support a shape of a flexible part of the at least one female joining section. The rigid part of the male joining section can stabilize the flexible part of the at least one female joining section. In total, a tightness of the coupling of the duct parts can be improved.
Alternatively or additionally, at least one male joining section of at least one second duct part can be at least partly flexible. Particularly, the whole at least one second duct part can be at least partly flexible.

Advantageously, a radial outer surface of the at least one male joining section can be designed for acting as a circumferential sealing face. Additionally or alternatively a radial inner surface, in particular at least one clamping part, of the clamping ring can be designed for acting as a circumferential sealing face. At least one female joining section can at least partly be designed for acting as a seal between the clamping ring and the at least one male joining section.

Advantageously, the at least one second duct part can comprise or consist of plastic, in particular thermoplastic.

Advantageously, the at least one second duct part can comprise or consist of a formed component. At least one second duct part can consist of or comprise a molded part, particularly an injection-molded part.

Advantageously, at least one fastener part and/or at least one joining section of at least one second duct part can be achieved by a process of forming, in particular molding, the at least one second duct part. Favorably, at least one second duct part and at least one fastener part and/or at least one joining section can be a single-piece design. Alternatively, the at least one second duct part with at least one fastener part and/or at least one joining section can be realized as a multicomponent part.

Advantageously, at least one female joining section can comprise or consist of a flexible material, in particular silicone and/or rubber and/or a sealing material.

Advantageously, at least one first duct part can comprise or consist of a formed component. At least one first duct part can be a molded part, particularly an injection-molded part and/or a blow-molded part.

Advantageously, at least one clamping part and/or at least one joining section of at least one first duct part can be achieved by a process of forming, in particular molding, the at least one first duct part. Favorably, at least one first duct part and at least one joining section can be single-piece design. Alternatively, the at least one first duct part with at least one clamping part and/or at least one joining section can be realized as a multicomponent part.

At least one first duct part can comprise or consist of a kind of hose, in a particular fabric tube.

Advantageously, the clamping ring can at least partly be rigid. So, a mechanical stability of the clamping ring coupling of the duct parts and the connection can be improved. Further, the clamping ring can be handled easier. Furthermore, the at least one fastener can easier be locked and unlocked.

Advantageously, the clamping ring can comprise or consist of rigid material or a material mixture, in particular plastic, favorably thermoplastic, particularly Polyamide (PA) or Polyphthalamide (PPA), and/or metal.

Advantageously, the clamping ring, particular the material, can have a temperature resistance up to 220 °C and more.

Advantageously, a cross-section of the clamping ring and/or at least one female joining section and/or at least one male joining section has a round shape. Favorably, the cross-sections of the clamping ring and the two joining sections can be similar. Some cross-sections also can differ.

Advantageously, an internal or an external diameter of at least one first duct part and at least one second duct part apart from their joining sections can be identical or different. Favorably, the diameter of the at least one first duct part can be smaller than the respective diameter of the at least one second duct part.

Advantageously, one duct part can have two female joining sections or two male joining sections. Alternatively, one duct part can have one female joining section and one male joining section.

Advantageously, one duct part can have fastener parts for engaging with two clamping rings or clamping parts for engaging with two clamping connections. Alternatively, said duct part can have fastener parts and clamping parts for engaging with one fastener and one clamping connection.

The invention can be used with an intake system of a charged internal combustion engine of a motor vehicle, in particular charged by an exhaust gas turbocharger, a compressor or any other charging device. The invention can also be used in a technical area beyond automotive engineering. In particular, the invention can be used with industrial engines.

According to a favorable embodiment of the invention, the at least one fastener can be locked and unlocked by rotating and/or pushing/pulling the clamping ring relative to the at least one second duct part, in particular the at least one male joining section and/or at least one fastener part of the at least one second duct part, around/along the coupling axis.

In this way, the at least one fastener can be locked and unlocked automatically by handling, in particular mounting, the clamping ring.

For locking/unlocking the at least one fastener a combination of a rotating movement and a pushing/pulling movement can be performed.

According to the invention, the at least one fastener realizes a form-locked and/or force-locked join.

The at least one fastener can realize a form-locked join or a force-locked join or a combination of a form-locked and a force-locked join.

Form-locked joins easy can be locked and unlocked. An effort for locking and unlocking the fastener can be reduced.

Force-locked joins can be self-secured against uncontrolled unlocking.

According to a further favorable embodiment of the invention, at least one fastener can comprise or consist of at least one screw joint and/or at least one bayonet joint.

Screw joints and bayonet joints can be realized as form-locked joins.

Advantageously, at least one fastener can comprise at least one screw joint or at least one bayonet joint or a combination of at least one screw joint and at least one bayonet joint.

Fastener parts of screw joints and bayonet joints easy can be realized by forming processes, in particular injection molding or blow molding processes, with the at least one duct part or the clamping ring.

Advantageously, at least one fastener part of at least one second duct part can comprise or consist of an external thread of at least one screw joint. The clamping ring can comprise or consist of a fastener part with a corresponding internal thread. For locking the screw joint, a rotation of the clamping ring relative to the second duct part around the coupling axis can be performed. By means of the threads, the rotating movement causes automatically a pushing movement along the coupling axis. In total, the fastener with a screw joint can be locked and unlocked by a combination of a rotating movement and a pushing movement.

Advantageously, at least one fastener part of at least one bayonet joint can comprise or consist of at least one nose. At least one corresponding fastener part can comprise or consist of at least one retainer for the at least one nose. At least one nose and/or at least one retainer can be on the side of the at least one second duct part. Accordingly, at least one retainer and/or at least one nose can be on the side of the clamping ring. The at least one second duct part and so the clamping ring can comprise only noses or only retainers or a combination of noses and retainers each.

A bayonet joint typically can easy be locked and unlocked by a combination of a rotating movement and a pushing/pulling movement.

According to a further favorable embodiment of the invention, at least one clamping part can comprise or consist of at least one clamping protrusion on the radial inner circumferential side of the clamping ring.

With at least one clamping protrusion, a pressure impact from the clamping ring on the female joining section and if so the male joining section can be improved. So, a tightness and/or a stability of the coupling of the duct parts can further be improved.

Advantageously, at least one clamping protrusion can be continuous or discontinuous in circumferential direction.

Alternatively or additionally at least one male joining section can have at least one clamping protrusion. Said clamping protrusion can interact with the clamping ring, in particular with the at least one clamping part, particularly the clamping protrusion, of the clamping ring.

According to a further favorable embodiment of the invention, a radial inner diameter of at least one female joining section and/or a radial outer diameter of at least one male joining section and/or a radial inner diameter of the clamping ring can vary, favorably can increase or decrease, along the coupling axis.

With appropriate increasing or decreasing diameters, a guidance for the at least one male joining section can be realized. The at least one male joining section can easier be inserted in the at least one female joining section.

Further, forces which can be applied by the clamping ring at least on the female joining section can automatically be varied, in particular be improved, when moving the clamping ring along the coupling axis in a locking position. The clamping ring can be moved in locking position by locking the fastener. In the locking position, the coupling of the duct parts is ready for operation.

At least a radial inner surface at least of the at least one female joining section and/or at least a radial outer surface at least of the male joining section and/or at least a radial inner surface of the clamping ring are funnel shaped or conical shaped or a combination of funnel shaped and conical shaped.

In case the maximum radial outer diameter of the at least one female joining section is larger than the radial inner diameter of the clamping ring, for assembling, the clamping ring can be mounted on the first duct part from an end which is on the far side of the at least one female joining section. Alternative, the at least one flexible female joining section can be compressed and/or bent and the clamping ring can be mounted from the free end of the at least one female joining section.

According to the invention, the coupling device comprises at least one reinforcing sleeve, for reinforcing at least the at least one male joining section.

With the at least one reinforcing part a mechanical stability at least of the at least one male joining section can be improved. At least one reinforcing part acts as a counterpart to the clamping ring, in particular as a counterpart to at least one clamping part of the clamping ring. The stability requirements on the at least one male joining section so can be diminished. So, the at least one male joining section can at least partly be flexible.

Advantageously, at least one reinforcing part can be arranged in or on at least one male joining section.

Advantageously, at least one reinforcing part can be pressed in or on at least one male joining section.

Advantageously, at least one reinforcing part can be molded in or casted in or coated with the material of the at least one male joining section.

Advantageously, at least one reinforcing part can be partly or fully enclosed by the material of the at least one male joining section.

Advantageously, at least one reinforcing part can be placed near the radial inner circumferential side and/or the radial outer circumferential side of the at least one male joining section.

Advantageously, the at least one reinforcing part can have a shape which at least partly can be accordant or different to a shape of the radial inner circumferential side and/or a radial outer circumferential side of at least one male joining section and/or at least one female joining section and/or a radial inner circumferential side of the clamping ring. In this way, a force transmission can be better adapted, particularly improved. Favorably, mechanical forces can act more homogeneous.

Advantageously, the at least one reinforcing part can be annular. A cross-section of the at least one reinforcing part can be round, oval and/or angled. The cross-section can be homogeneous or can vary along the coupling axis.

Advantageously, a diameter of at least one annular reinforcing part can be constant or can vary along the coupling axis.

Favorably, at least one reinforcing part can have a cylindrical and/or a conical shape on its radial outer circumferential side and/or its radial inner circumferential side.

Advantageously, the at least one reinforcing part can at least partly be rigid. In particular, it can consist of or contain rigid material, particularly metal and/or plastic and/or carbon fiber and/or ceramic.

The object further is achieved by the charge air duct in that, a clamping ring for engaging around the connected joining sections of the duct parts with regard to a coupling axis, comprising at least one fastener part of at least one fastener for engaging with at least one corresponding fastener part of the at least one second duct part and comprising at least one clamping part of a clamping connection for pressing at least a part of the female joining section at least against the at least one male joining section. The object furthermore is achieved by the intake system in that, a clamping ring for engaging around the connected joining sections of the duct parts with regard to a coupling axis, comprising at least one fastener part of at least one fastener for engaging with at least one corresponding fastener part of the at least one second duct part and comprising at least one clamping part of a clamping connection for pressing at least a part of the female joining section at least against the at least one male joining section.

The object besides is achieved by the duct part in that, the duct part comprising at least one fastener part of at least one fastener for engaging with at least one corresponding fastener part of a clamping ring for engaging around the connected joining sections of the duct parts with regard to a coupling axis.

The object moreover is achieved by the clamping ring in that, the clamping ring is designed for engaging around the connected joining sections of the duct parts with regard to a coupling axis, the clamping ring comprising at least one fastener part of at least one fastener for engaging with at least one corresponding fastener part of the at least one second duct part and comprising at least one clamping part of a clamping connection for pressing at least a part of the female joining section at least air against the at least one male joining section.

The above-mentioned advantages and characteristic features of the inventive coupling device, the inventive charge air duct, the inventive intake system, the inventive duct part and the inventive clamping ring apply analogously among each other. The single advantages and characteristic features can be combined among each other.

### Brief Description of Drawings

The present invention together with the above-mentioned and other objects and advantages may best be understood from the following detailed description of the embodiments, but not restricted to the embodiments, wherein is shown schematically
- figure 1: an air intake system of a turbocharged internal combustion engine of a motor vehicle with a charge air duct comprising two rigid duct parts and a flexible hose which are connected by use of two coupling devices according to a first embodiment;
- figure 2: a longitudinal section of one of the coupling devices of figure 1;
- figure 3: a longitudinal section of a coupling device of an air intake system according to a second embodiment, which is similar to the air intake system of figure 1.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

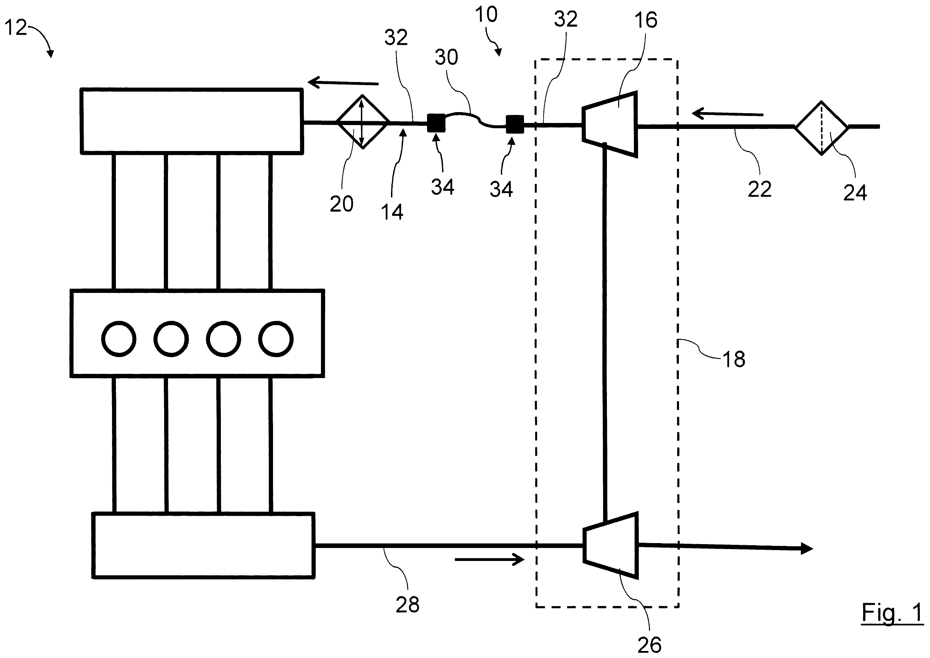

In figure 1 an air intake system 10 of a turbocharged internal combustion engine 12 of a motor vehicle is shown. With the intake system 10 the internal combustion engine 12 is supplied with combustion air.

The intake system 10 comprises a charge air duct 14 which is connecting an outlet for charge air of a compressor 16 of a turbocharger 18 with an inlet of a charge air cooler 20. An inlet of the compressor 16 is connected by an air duct 22 to an air filter 24 for cleaning the in-coming air. The compressor 16 is driven by an exhaust turbine 26 of the turbocharger 18 which is located in an exhaust duct 28 of the internal combustion engine 12.

In the charge air duct 14 high differences between an internal pressure and an external pressure can occur during operation of the internal combustion engine 12. Said pressure differences can be up to 4 bar or more. Furthermore, in the charge air duct 14 relatively high temperatures can arise during operation. The temperature in the charge air duct 14 can be up to 220 °C and more.

The charge air duct 14 comprises a flexible hose 30, which can be termed first duct part. The hose 30 connects two rigid duct parts 32, which can be termed second duct parts.

The rigid duct parts 32 are coupled to the hose 30 by use of a coupling device 34 each on one end. The upstream duct part 32 is connected with its other end to the outlet of the compressor 16. The downstream duct part 32 is connected with its other end to the inlet of the charge air cooler 20.

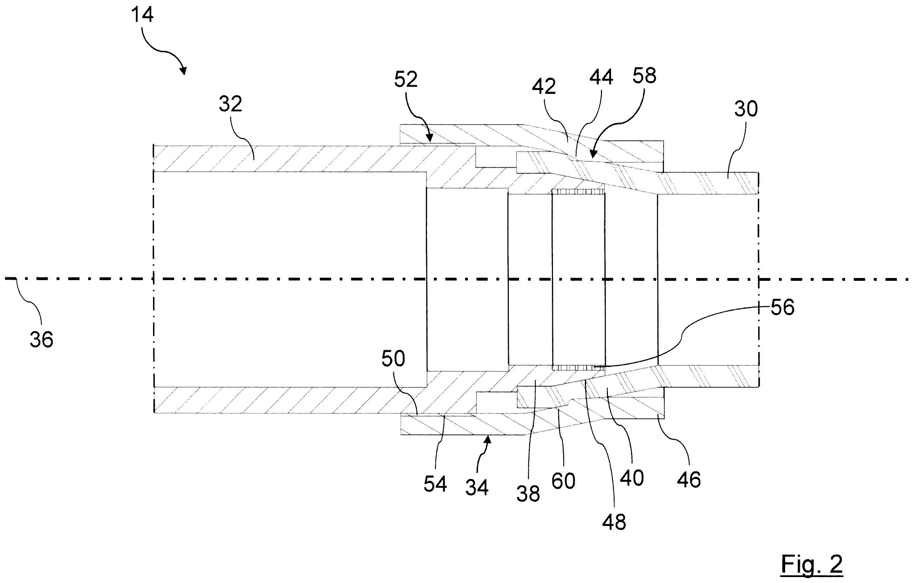

A detailed longitudinal section of one of the coupling devices 34 is shown in figure 2 exemplarily. The sectional plane extends parallel to a coupling axis 36 of the coupling. The coupling axis 36 is an imaginary axis of the coupling of a male joining section 38 of the duct part 32 with a corresponding female joining section 40 of the hose 30. In the description of the invention, "radial", "axial", "coaxial", "circumferential", "tangential", "annular" and the like refer to the coupling axis 36 unless otherwise noted.

The duct parts 32 are injection-molded parts of thermoplastic. The duct parts 32 each have one male joining section 38. Each male joining section 38 act as a clamping part for engaging with the corresponding female joining section 40 of the hose 30 and a respective clamping part 42 with a clamping protrusion 44 of a clamping ring 46 of the coupling device 34. Each clamping ring 46 is engaging around the connected joining sections 38 and 40 of the duct part 32 with the hose 30 with regard to the coupling axis 36. A diameter of the hose 30 is smaller than the diameters of the duct parts 32 apart from the joining sections 38 and 40.

The male joining sections 38 each are adjacent to the end of the duct part 32 which is facing the hose 30. The male joining sections 38 are rigid. The male joining sections 38 being achieved by a process of molding the duct parts 32 each in one piece.

The cross-section of the male joining sections 38 is round. The radial outer surface of the male joining sections 38 is conical shaped. A radial outer diameter of the male joining sections 38 is increasing along the respective coupling axis 36 away from the end of the respective duct part 32.

A radial outer surface of each male joining section 38 adjacent to its end acts as a radial inner circumferential sealing face 48 of the coupling device 34.

Further, each duct part 32 comprises an external thread 50 of a screw joint 52 of the coupling device 34. The external thread 50 is adjacent to the male joining section 38 on the opposite side of the free end of the respective duct part 32. The external thread 50 is arranged on the radial outer circumferential side of a cylindrical section of the duct part 32. The external thread 50 of the screw joint 52 being realized by an injection molding process in one piece with the duct part 32.

The screw joint 52 has the function of a fastener of the coupling device 34. The external thread 50 is acting as a fastener part. The external thread 50 is engaged with a corresponding internal thread 54 of the clamping ring 46. The internal thread 54 also is acting as a fastener part.

Furthermore, each duct part 32 has a reinforcing sleeve 56 of the coupling device 34. The reinforcing sleeve 56 consists of rigid metal.

The reinforcing sleeve 56 is an annular cylinder. A cross-section of the reinforcing sleeve 56 is round. The cross-section is homogeneous along the coupling axis 36. A diameter of the reinforcing sleeve 56 is constant along the coupling axis 36. The reinforcing sleeve 56 has a shape according to a shape of the radial inner circumferential side of the male joining section 38, which is also cylindrical. The shape of the reinforcing sleeve 56 is different to the shape of the radial outer circumferential side of the male joining section 38.

The reinforcing sleeve 56 is pressed and overmolded in the radial inner circumferential side of the male joining section 38. The radial outer side of the reinforcing sleeve 56 and its front side on the far side of the open end of the male joining section 38 is enclosed by the material of the male joining section 38. Its radial inner side and its front side at the open end of the male joining section 38 are uncovered.

The reinforcing sleeve 56 is for reinforcing the male joining section 38. With the reinforcing sleeve 56 a mechanical stability of the male joining section 38 being improved. The reinforcing sleeve 56 is acting as a counterpart to the clamping part 42 with the clamping protrusion 44 of the clamping ring 46.

The hose 30 has one female joining section 40 on both ends each. The hose 30 and so the female joining sections 40 are flexible. The hose 30 with the female joining sections 40 is molded of a flexible silicone material in one piece.

A cross-section of the female joining sections 40 is round. The female joining sections 40 are conical shaped. A radial inner diameter of the female joining sections 40 is increasing along the coupling axis 36 toward their open ends. The shapes of the female joining sections 40 are different to the shape of the reinforcing sleeves 56.

The male joining section 38 of the respective duct part 32 is plugged into the corresponding female joining section 40 of the hose 30. Due to the conical forms the male joining section 38 can easy be inserted in the female joining section 40. The male joining section 38 is supporting the shape of the female joining section 40.

The female joining section 40 further act as clamping parts for engaging with the clamping parts 40 and the clamping protrusions 44 of the clamping rings 46 and with the male joining sections 38 of the duct parts 32. Furthermore, each female joining section 40 acts as a seal each between the clamping part 42 in the clamping protrusion 44 of the clamping ring 46 and the male joining section 38.

Each clamping ring 46 consists of rigid thermoplastic. The clamping rings 46 have a temperature resistance up to 220 °C and more.

A cross-section of each clamping ring 46 is round. A center part area of each clamping ring 46 is conical shaped. A radial inner diameter of each clamping ring 46 there is increasing along the coupling axis 36 from its end adjacent to its clamping protrusion 44 toward its end adjacent to its internal thread 54. The shape of the radial inner circumferential side of each clamping ring 46 is different to the shape of the reinforcing sleeves 56.

Each clamping ring 46 is locked to the respective duct part 32 by use of the respective screw joint 52. The internal thread 54 for this acts as a fastener part. The internal thread 54 is adjacent to the open side of the clamping ring 46 which faces the duct part 32. The internal thread 54 being realized by an injecting molding process with the clamping ring 46 in one piece.

Further, each clamping ring 46 is engaged with the female joining section 40 of the hose 30 by use of a clamping connection 58. The clamping part 42 of the clamping ring 46 with the annular clamping protrusion 44 are part of the clamping connection 58. The clamping protrusion 44 is on the radial inner circumferential side of the clamping ring 46. It is arranged axial between the internal thread 54 and the open side of the clamping ring 46 which faces the hose 30. The clamping protrusion 44 is at the transition from the conical section to a cylindrical section of the clamping ring 46 in an area with a reduced radial inner diameter. The clamping protrusion 44 is continuous in circumferential direction.

The radial inner surface of the clamping part 42 of the clamping ring 46 with the clamping protrusion 44 act as a radial outer circumferential sealing face 60.

The clamping part 42 with clamping protrusion 44 is pressing the female joining section 40 of the hose 30 against the male joining section 38 of the duct part 32. The flexible female joining section 40 of the hose 30 is sealing the coupling with the male joining section 38. With the clamping protrusion 44, a force impact from the clamping ring 46 on the female joining section 40 being effected. So, a tightness and a stability of the coupling being improved.

For assembling, the flexible female joining section 40 being compressed and bent and the clamping rings 46 each being mounted from the free ends of the respective female joining section 40.

The male joining sections 38 of the duct parts 32 being plugged into the respective female joining section 40 of the hose 30 each.

The clamping rings 46 being pushed axial to the coupling axis 36 each toward the free end of the respective female joining section 40. As soon as the internal thread 54 of each clamping ring 46 contacts the external thread 50 of the respective duct part 32, a rotation of the clamping ring 46 relative to the second duct part 32 around the coupling axis 36 in the direction of closing of the screw joint 52 being performed. By means of the threads 50 and 54, the rotating movement causes automatically a pushing movement along the coupling axis 36. In total, the screw joint 52 being locked by a combination of a rotating movement and a pushing movement.

By locking the screw joint 52, a force being applied by the clamping part42 and the clamping protrusion 44 of the clamping ring 46 on the female joining section 40 automatically being improved when moving the clamping ring 46 along the coupling axis 36 in locking position.

In its locking position, which is shown in figure 2, each clamping ring 46 is securing the coupling of the respective duct part 32 with the hose 30.

The clamping part 42 and the clamping protrusion 44 of the clamping ring 46 prevent that the hose 30 can remove from the respective duct part 32. Further, with the clamping ring 46 a mechanical stability of the coupling of the duct part 32 with the hose 30 is improved. Besides, the clamping part 42 and the clamping protrusion 44 of the clamping ring 46 effect an airtightness of the coupling. In total, a pressure resistance and a temperature resistance of the coupling of the duct part 32 with the hose 30 is enhanced by the clamping ring 46.

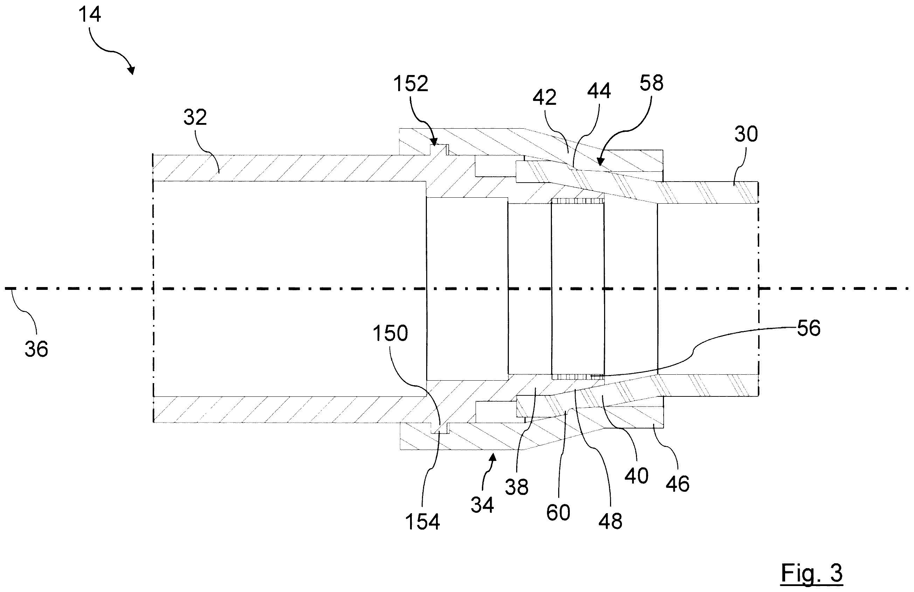

Figure 3 depicts a second embodiment of a coupling device 34. Those parts which are equal to those of the first embodiment according to figures 1 and 2 have the same reference numbers. Different to the first embodiment, the fastener of the second embodiment consists of a bayonet joint 152. The bayonet joint 152 is a form-locked join.

The bayonet joint 152 comprises two noses 150 and two corresponding retainers 154. The noses 150 are placed on opposed radial outer circumferential sides of the duct parts 32. The retainers 154 are placed on opposed radial inner circumferential sides of the clamping rings 46. The retainers 154 have a form which is appropriate for the bayonet joint 152.

The noses 150 of the bayonet joint 152 being realized by an injection molding process with the duct parts 32 each in one piece. The retainers 154 of the bayonet joint 152 being realized by an injecting molding process with the clamping rings 46 each in one piece.

The bayonet joint 152 being locked and unlocked by a combination of a rotating movement and a pushing movement.

## Claims

1. Coupling device (34) of an intake system (10) of a charged internal combustion engine (12), in particular of a motor vehicle, comprising at least one first duct part (30) of a charge air duct (14) having a female joining section (40) at an end of the at least one first duct part (30) and comprising at least one second duct part (32) of the charge air duct (14) having a male joining section (38) at an end of the at least one second duct part (32), wherein at least the female joining section (40) of the at least one first duct part (30) is at least partly flexible and wherein the male joining section (38) can at least partly be plugged in the female joining section (40), the coupling device (34) further comprising at least one reinforcing sleeve (56), for reinforcing at least the at least one male joining section (38), and comprising a clamping ring (46) for engaging around the connected joining sections (38, 40) of the duct parts (30, 32) with regard to a coupling axis (36), comprising at least one fastener part (54; 154) of at least one fastener (52; 152) for engaging with at least one corresponding fastener part (50; 150) of the at least one second duct part (32) and comprising at least one clamping part (42, 44) of a clamping connection (58) for pressing at least a part of the female joining section (40) at least against the male joining section (38), **characterized in that** the at least one fastener (52; 152) realizes a form-locked and/or force-locked join, wherein at least a radial inner surface at least of the at least one female joining section (40) and/or at least a radial outer surface at least of the male joining section (38) and/or at least a radial inner surface of the clamping ring (46) are funnel shaped or conical shaped or a combination of funnel shaped and conical shaped, and wherein the reinforcing sleeve (56) is acting as a counterpart to the clamping part (42) with a clamping protrusion (44) of the clamping ring (46).

2. Coupling device according to claim 1, **characterized in that** the at least one fastener (52; 152) can be locked and unlocked by rotating and/or pushing/pulling the clamping ring (46) relative to the at least one second duct part (32), in particular the at least one male joining section (38) and/or at least one fastener part (50; 150) of the at least one second duct part (32), around/along the coupling axis (36).

3. Coupling device according to one of the previous claims, **characterized in that** at least one fastener comprises or consists of at least one screw joint (52) and/or at least one bayonet joint (152).

4. Coupling device according to one of the previous claims, **characterized in that** at least one clamping part (42) comprises or consists of at least one clamping protrusion (44) on the radial inner circumferential side of the clamping ring (46).

5. Charge air duct (14) of an intake system (10) of a charged internal combustion engine (12), in particular of a motor vehicle, with at least one coupling device (34) according to one of the previous claims.

6. Intake system (10) of a charged internal combustion engine (12), in particular of a motor vehicle, with at least one charge air duct (14) comprising at least one coupling device (34) according to one of the claims 1 to 4.

7. Duct part (32) of a charge air duct (14) of an intake system (10) of a charged internal combustion engine (12), in particular of a motor vehicle, comprising at least one male joining section (38) at least at one end, which can be plugged in a female joining section (40) at an end of an adjacent duct part (30) of the charge air duct (14), the duct part (32) comprising at least one fastener part (50; 150) of at least one fastener (52; 152) for engaging with at least one corresponding fastener part (54; 154) of a clamping ring (46) for engaging around the connected joining sections (38, 40) of the duct parts (30, 32) with regard to a coupling axis (36), the duct part (32) comprising at least one reinforcing sleeve (56) for reinforcing at least the at least one male joining section (38) **characterized in that** at least a radial outer surface of the male joining section (38) is funnel shaped or conical shaped or a combination of funnel shaped and conical shaped, and the reinforcing sleeve (56) is suitable to act as a counterpart to a clamping part (42) with a clamping protrusion (44) of the clamping ring (46).

8. Clamping ring (46) of a coupling device (34) of an intake system (10) of a charged internal combustion engine (12), in particular of a motor vehicle, for coupling at least one first duct part (30) of a charge air duct (14) with at least one second duct part (32) of the charge air duct (14), wherein a male joining section (38) at an end of the at least one second duct part (32) can at least partly be plugged in a female joining section (40) at an end of the at least one first duct part (30), wherein the clamping ring (46) is designed for engaging around the connected joining sections (38, 40) of the duct parts (30, 32) with regard to a coupling axis (36), the clamping ring (46) comprising at one end at least one fastener part (54; 154) of at least one fastener (52; 152) for engaging with at least one corresponding fastener part (50; 150) of the at least one second duct part (32) and comprising at least one clamping part (42, 44) of a clamping connection (58) for pressing at least a part of the female joining section (40) at least against the at least one male joining section (38) **characterized in that** a center part of the clamping ring (46) is conical with a radial inner diameter increasing along the coupling axis (36) from an end adjacent to a clamping protrusion (44) to an end adjacent to its fastener part (54), wherein said clamping protrusion (44) is positioned at a transition from the conical section to a cylindrical section of the clamping ring (46).

## Patentansprüche

1. Kupplungsvorrichtung (34) eines Ansaugsystems (10) einer aufgeladenen Brennkraftmaschine (12), insbesondere eines Kraftfahrzeugs, umfassend mindestens ein erstes Kanalteil (30) eines Ladeluftkanals (14) mit einem weiblichen Verbindungsstück (40) an einem Ende des mindestens einen ersten Kanalteils (30) und umfassend mindestens einen zweiten Kanalteil (32) des Ladeluftkanals (14) mit einem männlichen Verbindungsstück (38) an einem Ende des mindestens einen zweiten Kanalteils (32), wobei mindestens das weibliche Verbindungsstück (40) des mindestens einen ersten Kanalteils (30) mindestens teilweise flexibel ist und wobei das männliche Verbindungsstück (38) zumindest teilweise in das weibliche Verbindungsstück (40) einsteckbar ist, wobei die Kupplungsvorrichtung (34) weiter mindestens eine Verstärkungshülse (56) zur Verstärkung mindestens des mindestens einen männlichen Verbindungsstücks (38) umfasst, und einen Klemmring (46) zum Eingriff um die verbundenen Anschlussteile (38, 40) der Kanalteile (30, 32) relativ zu einer Kupplungsachse (36) umfasst, umfassend mindestens ein Befestigungsteil (54; 154) von mindestens einem Befestigungselement (52; 152) zum Eingriff mit mindestens einem entsprechenden Befestigungsteil (50; 150) des mindestens einen zweiten Kanalteils (32) und umfassend mindestens ein Klemmteil (42, 44) einer Klemmverbindung (58) zum Anpressen mindestens eines Teils des weiblichen Verbindungsstücks (40) mindestens gegen das männliche Verbindungsstück (38), **dadurch gekennzeichnet, dass** das mindestens eine Befestigungselement (52; 152) eine formschlüssige und/oder kraftschlüssige Verbindung ausbildet, wobei mindestens eine radiale Innenfläche mindestens des mindestens einen weiblichen Verbindungsstücks (40) und/oder mindestens eine radiale Außenfläche mindestens des männlichen Verbindungsstücks (38) und/oder mindestens eine radiale Innenfläche des Klemmrings (46) trichterförmig oder konusförmig oder eine Kombination von trichterförmig und konusförmig sind, und wobei die Verstärkungshülse (56) als ein Gegenelement zu dem Klemmteil (42) mit einem Klemmvorsprung (44) des Klemmrings (46) fungiert.

2. Kupplungsvorrichtung nach Anspruch 1, **dadurch gekennzeichnet, dass** das mindestens eine Befestigungselement (52; 152) durch Drehen und/oder Schieben/Ziehen des Klemmrings (46) relativ zu dem mindestens einen zweiten Kanalteil (32) um die/entlang der Kupplungsachse (36) verriegelt und entriegelt werden kann, insbesondere das mindestens eine männliche Verbindungsstück (38) und/oder mindestens eine Befestigungsteil (50; 150) des mindestens einen zweiten Kanalteils (32).

3. Kupplungsvorrichtung nach einem der vorherigen Ansprüche, **dadurch gekennzeichnet, dass** das mindestens eine Befestigungselement mindestens eine Schraubverbindung (52) und/oder mindestens eine Bajonettverbindung (152) umfasst oder daraus besteht.

4. Kupplungsvorrichtung nach einem der vorherigen Ansprüche, **dadurch gekennzeichnet, dass** das mindestens eine Einspannteil (42) mindestens einen Klemmvorsprung (44) auf der radial inneren Umfangsseite des Klemmrings (46) umfasst oder daraus besteht.

5. Ladeluftkanal (14) eines Ansaugsystems (10) einer aufgeladenen Brennkraftmaschine (12), insbesondere eines Kraftfahrzeugs, mit mindestens einer Kupplungsvorrichtung (34) nach einem der vorherigen Ansprüche.

6. Ansaugsystem (10) einer aufgeladenen Brennkraftmaschine (12), insbesondere eines Kraftfahrzeugs, mit mindestens einem Ladeluftkanal (14) umfassend mindestens eine Kupplungsvorrichtung (34) nach einem der Ansprüche 1 bis 4.

7. Kanalteil (32) eines Ladeluftkanals (14) eines Ansaugsystems (10) einer aufgeladenen Brennkraftmaschine (12), insbesondere eines Kraftfahrzeugs, umfassend mindestens ein männliches Verbindungsstück (38) mindestens an einem Ende, welches in ein weibliches Verbindungsstück (40) an einem Ende eines angrenzenden Kanalteils (30) des Ladeluftkanals (14) einsteckbar ist, wobei das Kanalteil (32) mindestens ein Befestigungsteil (50; 150) mindestens eines Befestigungselements (52; 152) zum Eingriff mit mindestens einem entsprechenden Befestigungsteil (54; 154) eines Klemmrings (46) zum Eingriff um die verbundenen Anschlussteile (38, 40) der Kanalteile (30, 32) relativ zu einer Kupplungsachse (36) umfasst, wobei das Kanalteil (32) mindestens eine Verstärkungshülse (56) zum Verstärken mindestens das mindestens eine männliche Verbindungsstück (38) umfasst, **dadurch gekennzeichnet, dass** mindestens eine radiale Außenfläche des männlichen Verbindungsstücks (38) trichterförmig oder konusförmig oder eine Kombination von trichterförmig und konusförmig ist, und dass die Verstärkungshülse (56) geeignet ist, als ein Gegenelement zu einem Einspannteil (42) mit einem Klemmvorsprung (44) des Klemmrings (46) zu fungieren.

8. Klemmring (46) einer Kupplungsvorrichtung (34) eines Ansaugsystems (10) einer aufgeladenen Brennkraftmaschine (12), insbesondere eines Kraftfahrzeugs, zur Ankopplung mindestens eines ersten Kanalteils (30) eines Ladeluftkanals (14) an mindestens einen zweiten Kanalteil (32) des Ladeluftkanals (14), wobei ein männliches Verbindungsstück (38) an einem Ende des mindestens einen zweiten Kanalteils (32) zumindest teilweise in ein weibliches Verbindungsstück (40) an einem Ende des mindestens einen ersten Kanalteils (30) einsteckbar ist, wobei der Klemmring (46) zum Eingriff um die verbundenen Anschlussteile (38, 40) der Kanalteile (30, 32) relativ zu einer Kupplungsachse (36) ausgebildet ist, wobei der Klemmring (46) an einem Ende mindestens ein Befestigungsteil (54; 154) von mindestens einem Befestigungselement (52; 152) zum Eingriff mit mindestens einem entsprechenden Befestigungsteil (50; 150) des mindestens einen zweiten Kanalteils (32) umfasst und mindestens ein Klemmteil (42, 44) einer Klemmverbindung (58) zum Anpressen mindestens eines Teils des weiblichen Verbindungsstücks (40) mindestens gegen das mindestens eine männliche Verbindungsstück (38) umfasst, **dadurch gekennzeichnet, dass** ein Mittelteil des Klemmrings (46) konisch mit einem radialen Innendurchmesser ist, der entlang der Kupplungsachse (36) von einem an einen Klemmvorsprung (44) angrenzenden Ende zu einem an dessen Befestigungsteil (54) angrenzenden Ende zunimmt, wobei der Klemmvorsprung (44) an einem Übergang von dem konischen Abschnitt zu einem zylindrischen Abschnitt des Klemmrings (46) positioniert ist.

## Revendications

1. Dispositif d'accouplement (34) d'un système d'admission (10) d'un moteur à combustion interne chargé (12), en particulier d'un véhicule automobile, comprenant au moins une première partie de conduit (30) d'un conduit d'air de suralimentation (14) ayant une section de raccordement femelle (40) à une extrémité de la première partie de conduit (30), au moins au nombre d'une, et comprenant au moins une seconde partie de conduit (32) du conduit d'air de suralimentation (14) ayant une section de raccordement mâle (38) à une extrémité de la seconde partie de conduit (32), au moins au nombre d'une, au moins la section de jonction femelle (40) de la première partie de conduit (30), au moins au nombre d'une, étant au moins partiellement flexible et la section de jonction mâle (38) pouvant au moins partiellement être enfichée dans la section de jonction femelle (40), le dispositif d'accouplement (34) comprenant en outre au moins un manchon de renforcement (56), pour renforcer au moins la section de jonction mâle (38), au moins au nombre d'une, et comprenant une bague de serrage (46) pour s'engager autour des sections de jonction reliées (38, 40) des parties de conduit (30, 32) par rapport à un axe d'accouplement (36), comprenant au moins une partie de fixation (54 ; 154) de la fixation (52 ; 152), au moins au nombre d'une, pour venir en prise avec au moins une partie de fixation correspondante (50 ; 150) de la seconde partie de conduit (32), au moins au nombre d'une et comprenant au moins une partie de serrage (42, 44) d'une liaison de serrage (58) pour presser au moins une partie de la section de jonction femelle (40) au moins contre la section de jonction mâle (38), **caractérisé en ce que** la fixation (52 ; 152), au moins au nombre d'une, réalise une jonction verrouillée en forme et/ou verrouillée en force, au moins une surface intérieure radiale au moins de la section de jonction femelle (40), au moins au nombre d'une, et/ou au moins une surface extérieure radiale au moins de la section de jonction mâle (38) et/ou au moins une surface intérieure radiale de la bague de serrage (46) étant en forme d'entonnoir ou conique ou une combinaison de forme d'entonnoir et conique, et le manchon de renforcement (56) agissant en contrepartie de la partie de serrage (42) avec une protubérance de serrage (44) de la bague de serrage (46).

2. Dispositif d'accouplement selon la revendication 1, **caractérisé en ce que** la fixation (52 ; 152), au moins au nombre d'une, peut être verrouillée et déverrouillée par rotation et/ou poussée/tirage de la bague de serrage (46) par rapport à la seconde partie de conduit (32), au moins au nombre d'une, autour/le long de l'axe d'accouplement (36), en particulier la section de jonction mâle (38), au moins au nombre d'une, et/ou au moins une partie de fixation (50 ; 150) de la seconde partie de conduit (32), au moins au nombre d'une.

3. Dispositif d'accouplement selon l'une des revendications précédentes, **caractérisé en ce qu'**au moins une fixation comprend ou est constituée d'au moins un raccord à vis (52) et/ou d'au moins un raccord à baïonnette (152).

4. Dispositif d'accouplement selon l'une des revendications précédentes, **caractérisé en ce qu'**au moins une partie de serrage (42) comprend ou est constituée d'au moins une protubérance de serrage (44) du côté circonférentiel interne radial de la bague de serrage (46).

5. Conduit d'air de suralimentation (14) d'un système d'admission (10) d'un moteur à combustion interne chargé (12), en particulier d'un véhicule automobile, avec au moins un dispositif d'accouplement (34) selon l'une des revendications précédentes.

6. Système d'admission (10) d'un moteur à combustion interne chargé (12), en particulier d'un véhicule automobile, avec au moins un conduit d'air de suralimentation (14) comprenant au moins un dispositif d'accouplement (34) selon l'une des revendications 1 à 4.

7. Partie de conduit (32) d'un conduit d'air de suralimentation (14) d'un système d'admission (10) d'un moteur à combustion interne chargé (12), en particulier d'un véhicule automobile, comprenant au moins une section de jonction mâle (38) au moins à une extrémité qui peut être enfichée dans une section de raccordement femelle (40) à une extrémité d'une partie de conduit contiguë (30) du conduit d'air de suralimentation (14), la partie de conduit (32) comprenant au moins une partie de fixation (50 ; 150) d'au moins une fixation (52 ; 152) pour venir en prise avec au moins une partie de fixation correspondante (54 ; 154) d'une bague de serrage (46) pour venir en prise autour des sections de jonction reliées (38, 40) des parties de conduit (30, 32) par rapport à l'axe d'accouplement (36), la partie de conduit (32) comprenant au moins un manchon de renforcement (56) pour renforcer au moins la section de jonction mâle (38), au moins au nombre d'une, **caractérisée en ce qu'**au moins une surface extérieure radiale de la section de jonction mâle (38) est en forme d'entonnoir ou conique ou une combinaison de forme d'entonnoir et conique, et que le manchon de renforcement (56) est approprié pour agir en contrepartie de la partie de serrage (42) avec une protubérance de serrage (44) de la bague de serrage (46).

8. Bague de serrage (46) d'un dispositif d'accouplement (34) d'un système d'admission (10) d'un moteur à combustion interne chargé (12), en particulier d'un véhicule automobile, pour accoupler au moins une première partie de conduit (30) d'un conduit d'air de suralimentation (14) avec au moins une seconde partie de conduit (32) du conduit d'air de suralimentation (14), une section de raccordement mâle (38) à une extrémité de la seconde partie de conduit (32), au moins au nombre d'une, pouvant au moins partiellement être enfichée dans la section de jonction femelle (40) à une extrémité de la première partie de conduit (30), au moins au nombre d'une, la bague de serrage (46) étant réalisée pour venir en prise autour des sections de jonction reliées (38, 40) des parties de conduit (30, 32) par rapport à un axe d'accouplement (36), la bague de serrage (46) comprenant à une extrémité au moins une partie de fixation (54 ; 154) de la fixation (52 ; 152), au moins au nombre d'une, pour venir en prise avec au moins une partie de fixation correspondante (50 ; 150) de la seconde partie de conduit (32), au moins au nombre d'une, et comprenant au moins une partie de serrage (42, 44) d'une liaison de serrage (58) pour presser au moins une partie de la section de jonction femelle (40) au moins contre la section de jonction mâle (38), au moins au nombre d'une, **caractérisée en ce qu'**une partie centrale de la bague de serrage (46) est de forme conique avec un diamètre interne radial augmentant le long de l'axe d'accouplement (36) d'une extrémité contiguë à une protubérance de serrage (44) à une extrémité contiguë à sa partie de fixation (54), ladite protubérance de serrage (44) étant positionnée à un passage de la section conique à la section cylindrique de la bague de serrage (46).
